**Europäisches Patentamt**

**European Patent Office**

**Office européen des brevets**

(19)

(11) Numéro de publication: **0 141 757**
**A1**

(12)

# DEMANDE DE BREVET EUROPEEN

(21) Numéro de dépôt: **84420133.5**

(22) Date de dépôt: **31.07.84**

(51) Int. Cl.⁴: **B 60 R 9/10**

(30) Priorité: **12.09.83 FR 8314814**

(43) Date de publication de la demande: **15.05.85**
**Bulletin 85/20**

(84) Etats contractants désignés: **AT BE CH DE GB IT LI LU NL SE**

(71) Demandeur: **SOCIETE D'EXPLOITATION DES ETABLISSEMENTS MACOREX Société dite:, Chemin des Collines, F-69230 Saint Genis Laval (FR)**

(72) Inventeur: **Jacquet, Bernard, 29 Quai Saint Vincent, F-69001 Lyon (FR)**

(74) Mandataire: **Maisonnier, Jean, 28 rue Servient, F-69003 Lyon (FR)**

(54) **Porte-bicyclette destiné à équiper les barres porte-bagages d'un véhicule automobile.**

(57) L'invention concerne un support pour fixer une bicyclette sur le toit d'une voiture.

Le berceau (4) verrouille la roue avant. Le support (7) se referme sur la boîte de pédalier (18). Son levier rabattable (14) est verrouillable par une serrure.

Application: support antivol, peu encombrant et fixant la bicyclette en position droite.

1

## "Porte-bicyclette destiné à équiper les barres porte-bagages d'un véhicule automobile"

La présente invention a pour objet un porte-bicyclette destiné à équiper les barres porte-bagages d'un véhicule automobile.

Afin de fixer un bicyclette sur le toit d'un véhicule avec le maximum de sécurité et de facilité pour l'utilisateur, il est fréquent d'utiliser un porte-bicyclette monté sur des barres porte-bagages montées sur le toit ou sur le couvercle du coffre d'un véhicule, ceci en fonction du type de véhicule dont il s'agit.

Il existe deux grandes familles de porte-bicyclette, à savoir ceux dans lesquels la bicyclette est fixée en position inversée, et ceux dans lesquels la bicyclette est fixée en position droite.

Lorsque la bicyclette est fixée en position inversée, elle est tenue par le guidon et la selle. Ce mode de fixation, s'il présente toute sécurité d'un point de vue de la fixation de l'engin, risque de provoquer des détériorations de la bicyclette sous l'effet des contraintes imposées à celle-ci par les vibrations dues au roulement, en raison du porte-à-faux important par rapport aux points de fixation.

Les porte-bicyclettes assurant la fixation en position droite ne possèdent pas cet inconvénient, du fait que l'engin est tenu d'une part au niveau du tube de selle à proximité de cette dernière et d'autre part au niveau de la roue avant ou de la fourche supportant celle-ci. Cette solution nécessite toutefois la mise en oeuvre d'une potence de grandes dimensions pour la fixation du tube de selle, présentant l'inconvénient d'un encombrement à vide important, d'être inesthétique, et d'être peu pratique pour l'utilisateur, lors des opérations de mise en place et de retrait de la bicyclette.

La présente invention vise à remédier à ces inconvénients.

A cet effet, le porte-bicyclette qu'elle concerne du type dans lequel la bicyclette est fixée en position droite, et comprenant une barre longitudinale portant d'une part un berceau pour l'appui de la roue avant et d'autre part un support pour le cadre est caractérisé en ce que le support du cadre comporte une partie supérieure en forme de mâchoire ouverte vers le haut, et délimitant, en position fermée, une surface cylindrique qui, s'étendant sur un angle supérieur à 180°, est apte à enserrer la boîte de pédalier (18) de la bicyclette.

Du fait que la partie de la bicyclette fixée sur le support, est

2

la partie basse de l'engin, le support est de faible hauteur et donc facilement accessible pour l'utilisateur.

En outre, une fixation au niveau de la boîte de pédalier est très intéressante car ne détériorant absolument pas la bicyclette puisqu'il s'agit de la partie la plus résistante de celle-ci, à la jonction entre le tube inférieur du cadre, le tube de selle, et les deux tubes inférieurs servant au montage de la roue arrière.

D'un point de vue pratique, la mise en place de la bicyclette est très facile à réaliser : il suffit, la mâchoire étant ouverte, de poser la bicyclette de telle sorte que la boîte de pédalier vienne reposer dans la mâchoire et la roue avant dans le berceau qui lui est destiné. L'utilisateur doit alors simplement réaliser la fermeture de la mâchoire qui vient enserrer la boîte de pédalier, sans détérioration même superficielle de celle-ci grâce à un revêtement de la mâchoire en un matériau approprié, tel qu'une matière synthétique.

Afin d'assurer une parfaite tenue de la boîte de pédalier de la bicyclette, la partie de la mâchoire située du côté de l'avant de la bicyclette présente un évidement central, tandis que sa partie située du côté de l'arrière de la bicyclette comporte deux évidements latéraux.

L'évidement central permet le passage du tube inférieur de cadre tandis que les évidements latéraux permettent le passage des tubes fixés sur la boîte de pédalier et servant au montage de la roue arrière.

Selon une forme préférée de ce porte-bicyclette, la mâchoire est constituée par deux tronçons de surface cylindrique articulés l'un sur l'autre autour d'un axe parallèle à l'axe de la surface cylindrique, dont un tronçon est fixe et solidaire du support, et dont l'autre, articulé sur le premier, est actionné par un levier monté pivotant d'une part sur le tronçon de mâchoire considéré et d'autre part sur le support autour d'axes parallèles à celui de la surface cylindrique. Les opérations d'ouverture et de fermeture de la mâchoire sont donc réalisées par actionnement du levier.

Selon une possibilité intéressante, le montage du levier sur le support est réalisé par l'intermédiaire d'une double articulation mettant en oeuvre une tige de longueur réglable.

Les articulations de l'extrémité de cette tige délimitent avec les articulations des deux tronçons de mâchoire l'un sur l'autre, et du

3

levier sur l'un des tronçons de mâchoire, un quadrilatère déformable, de telle sorte que lorsque le levier vient en appui contre le support la mâchoire se trouve en position fermée.

La modification de la longueur de la tige de liaison entre le support et le levier permet de modifier la "pince" de la mâchoire et de l'adapter de façon précise à la boîte de pédalier de la bicyclette à transporter.

Le levier est équipé d'une serrure comportant un pêne destiné à être engagé dans une gâche ménagée dans le support, en position fermée du levier.

Cet agencement assure d'une part la sécurité contre le vol de la bicyclette lorsque le véhicule est à l'arrêt et d'autre part la sécurité contre les risques d'ouverture accidentelle du levier, lorsque le véhicule est en marche.

Selon une autre caractéristique ce porte-bicyclette est du type comprenant un support fixé sur une barre du porte-bagages à l'aide de deux paires de vis, les deux vis de chaque paire étant disposées de part et d'autre de la barre considérée et étant vissées dans une même plaque prenant appui sous la barre.

De façon originale, le support présente une ouverture dégageant une partie en forme de platine qui, prenant appui sur la barre, présente quatre trous pour le passage des vis, les têtes de chaque paire de vis étant associées à une plaque de couverture empêchant leur manoeuvre lorsqu'elle est en place, et le levier étant conformé et dimensionné de façon à prendre appui sur les plaques de couverture des têtes de vis et empêcher leur retrait, lorsque le levier est en position de fermeture.

De ce fait, le verrouillage du levier empêche non seulement d'ouvrir la mâchoire, mais également de démonter le support de mâchoire de la barre porte-bagages sur laquelle il est fixé, ce qui parfait la sécurité du porte-bicyclette contre les vols.

De toute façon, l'invention sera bien comprise à l'aide de la description qui suit, en référence au dessin schématique annexé représentant, à titre d'exemple non limitatif, une forme d'exécution de ce porte-bicyclette :

Figure 1 en est une vue en perspective ;

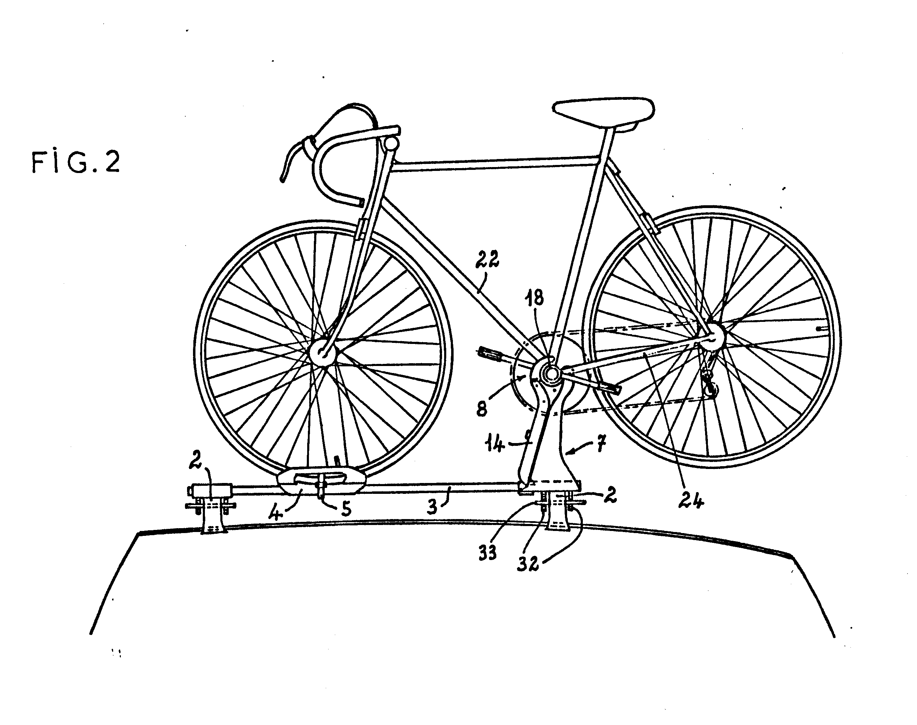

Figure 2 en est une vue de côté en position de transport d'une bicyclette ;

4

Figure 3 est une vue en perspective du support de cadre ;

Figures 4 et 5 sont deux vues de côté du support de figure 3, respectivement en position ouverte et en position fermée de la mâchoire.

Le porte-bicyclette représenté au dessin est destiné à être fixé sur deux barres porte-bagages (2) d'un véhicule automobile. Ce porte-bicyclette comprend une barre longitudinale (3) entretoisant les deux barres (2). Cette barre longitudinale (3) porte un berceau (4) destiné à recevoir la roue avant de la bicyclette, qui y est fixée à l'aide d'une sangle (5).

Une extrémité de cette barre longitudinale (3) est engagée dans un évidement (6) que comporte le support (7) du cadre de la bicyclette, qui est lui-même fixé sur l'une des deux barres porte-bagages (2).

Le support (7) d'orientation générale. verticale présente une extrémité supérieure en forme de mâchoire (8) délimitant une surface cylindrique qui, en position fermée, s'étend sur un angle de plus de 180°. Cette mâchoire (8) comprend un tronçon fixe (9) solidaire du support (7), sur lequel est monté pivotant autour d'un axe (10) parallèle à l'axe de la surface cylindrique, un tronçon (12). Sur ce tronçon (12) est monté pivotant autour d'un axe (13) parallèle à l'axe (10) un levier (14). Ce levier (14) est associé au support (7) par l'intermédiaire d'une tige (15), articulée d'une part sur le support et d'autre part sur le levier autour d'axes respectivement (16,17) parallèles aux axes (10 et 13).

La tige (15) est filetée, et engagée dans des ouvertures taraudées des axes (16,17) afin de permettre le réglage de la distance entre ceux-ci.

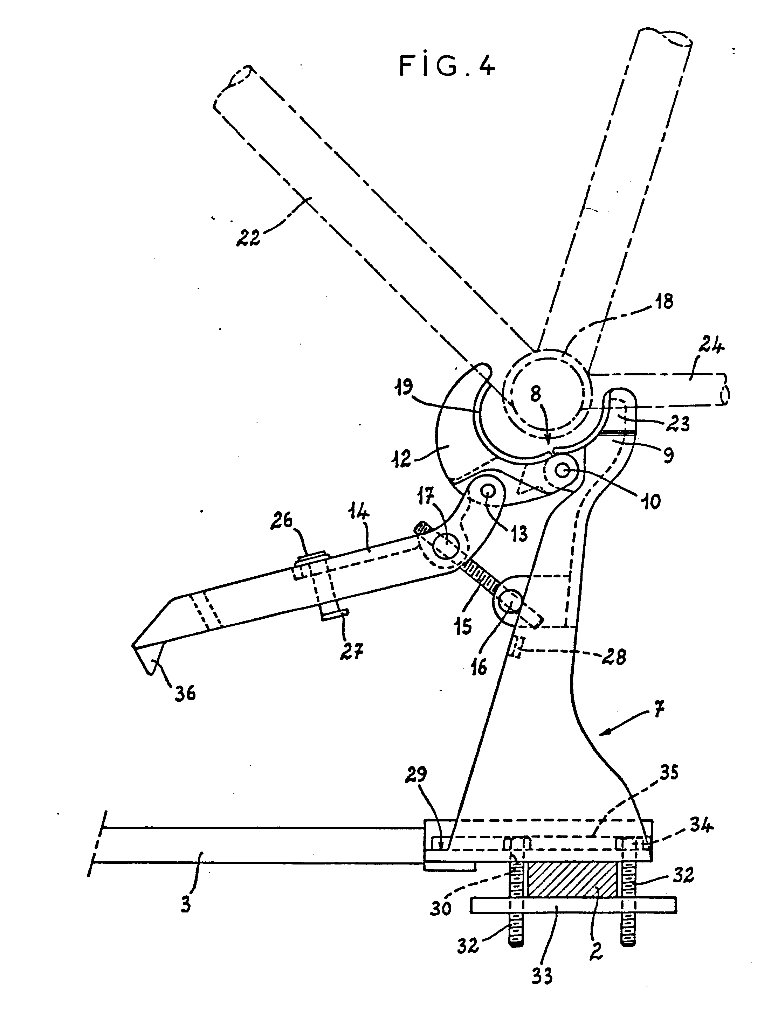

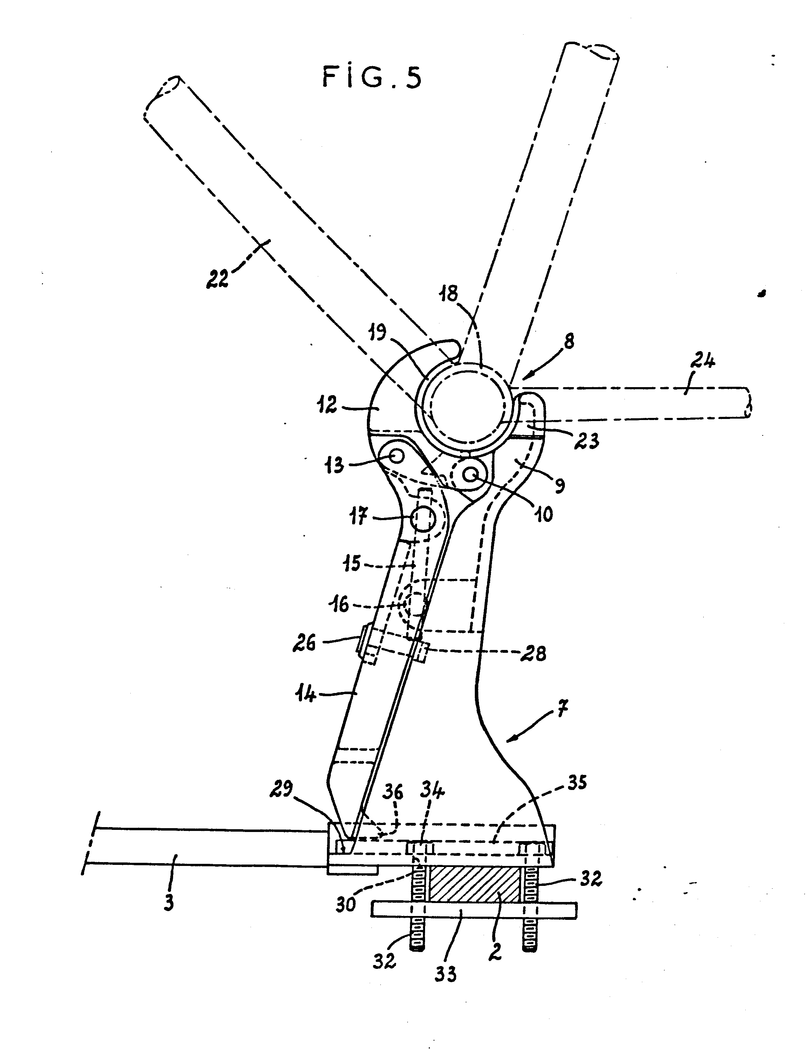

Les mouvements d'ouverture et de fermeture de la mâchoire (8) sont obtenus par action sur le levier (14) et par déformation du quadrilatère formé par les axes (10,13,16,17). Comme montré à la figure 4, lorsque le levier (14) est éloigné du support (7), la mâchoire est en position d'ouverture, permettant l'introduction de la boîte de pédalier (18) d'une bicyclette. Après appui de la boîte de pédalier dans la mâchoire (8), le basculement du levier (14) jusqu'à la position représentée à la figure 5 assure la fermeture de la mâchoire et le blocage de la boîte de pédalier. Afin d'éviter toutes détériorations de cette ·dernière, la mâchoire peut être revêtue d'un matériau (19) amortisseur, réalisé en une matière synthétique.

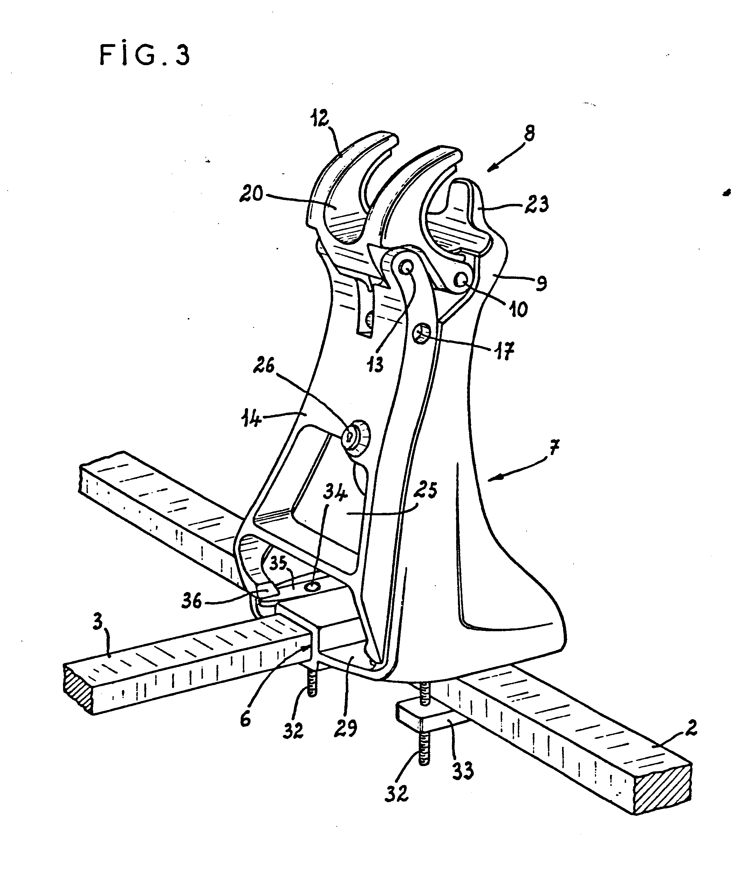

Comme montré notamment à la figure 3, le tronçon pivotant (12) de la mâchoire (8), c'est-à-dire celui situé du côté de l'avant de

5

la bicyclette présente un évidement central (20) permettant le passage du tube inférieur (22) du cadre de la bicyclette.

Pour sa part, le tronçon fixe (9) de mâchoire comporte deux évidements latéraux (23) destinés au passage des deux tubes (24) permettant le montage de la roue arrière de la bicyclette.

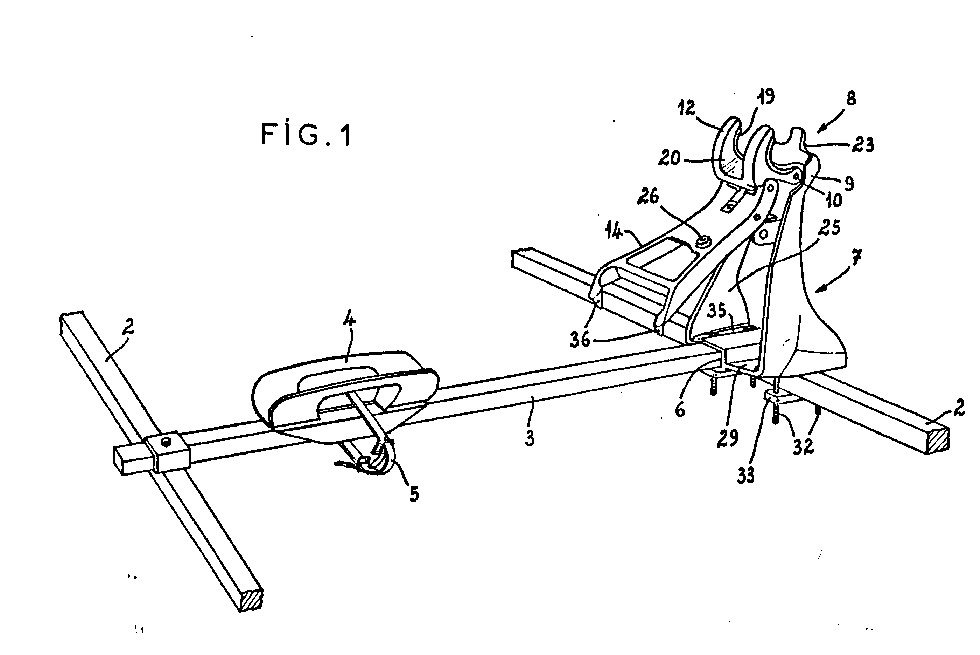

Comme montré au dessin, et notamment à la figure 1, le support (7) présente une ouverture centrale (25). La présence de cette ouverture centrale permet tout d'abord le montage sur le levier (14) d'une serrure (26), comportant un pène (27) qui, faisant saillie au niveau de ladite ouverture (25) en position de fermeture du levier, est apte à être engagé dans une gâche (28) ménagée dans le support (7).

En outre, l'ouverture (25) du support assure la formation à la partie inférieure de celui-ci d'une platine (29) prenant appui sur une barre (2). Cette platine comporte quatre trous (30) permettant le passage de deux paires de vis (32). Comme montré au dessin, et de façon connue, les deux vis (32) d'une même paire, sont disposées de part et d'autre de la barre (2) et sont vissées dans une même plaque (33) prenant appui sous la barre considérée. Les têtes (34) de chaque paire de vis (32) sont couvertes par une plaque (35) empêchant la manoeuvre desdites vis. En outre, comme montré au dessin, l'extrémité libre du levier (14) est conformée de façon à présenter deux ailes (36) destinées, en position de fermeture du levier, à venir prendre appui sur les plaques (35). Ainsi, lorsque le levier est en position de fermeture, les plaques (35) ne peuvent être retirées et les vis (32) ne peuvent être démontées.

Comme il ressort de ce qui précède, l'invention apporte une grande amélioration à la technique existante en fournissant un porte-bicyclette très compact, très pratique d'utilisation et assurant une excellente tenue de la bicyclette, sans détérioration de celle-ci, puisque l'organe essentiel de ce porte-bicyclette agit sur la boîte de pédalier qui est une partie particulièrement résistante.

Comme il va de soi, l'invention ne se limite pas à la seule forme d'exécution de ce porte-bicyclette décrite ci-dessus à titre d'exemple, elle en embrasse, au contraire, toutes les variantes de réalisation.

C'est ainsi notamment, que les moyens d'actionnement de la mâchoire pourraient être différents de ceux décrits précédemment, sans que l'on sorte pour autant du cadre de l'invention.

6

## REVENDICATIONS

1. Porte-bicyclette du type dans lequel la bicyclette est fixée en position droite, et comprenant une barre longitudinale portant d'une part un berceau pour l'appui de la roue avant et d'autre part un support pour le cadre, caractérisé en ce que le support (7) du cadre comporte une partie supérieure en forme de mâchoire (8) ouverte vers le haut, et délimitant, en position fermée, une surface cylindrique qui, s'étendant sur un angle supérieur à 180°, est apte à enserrer la boîte de pédalier (18) de la bicyclette.

2. Porte-bicyclette selon la revendication 1, caractérisé en ce que la partie de la mâchoire (8) située du côté de l'avant de la bicyclette présente un évidement central (20), tandis que sa partie située du côté de l'arrière de la bicyclette comporte deux évidements latéraux (23).

3. Porte-bicyclette selon l'une quelconque des revendications 1 et 2, caractérisé en ce que la mâchoire est constituée par deux tronçons de surface cylindrique articulés l'un sur l'autre autour d'un axe (10) parallèle à l'axe de la surface cylindrique, dont un tronçon (9) est fixe et solidaire du support (7), et dont l'autre (12), articulé sur le premier, est actionné par un levier (14) monté pivotant d'une part sur le tronçon (12) de mâchoire considéré et d'autre part sur le support (7) autour d'axes parallèles à celui de la surface cylindrique.

4. Porte-bicyclette selon la revendication 3, caractérisé en ce que le montage du levier sur le support est réalisé par l'intermédiaire d'une double articulation (16,17) mettant en oeuvre une tige (15) de longueur réglable.

5. Porte-bicyclette selon l'une quelconque des revendications 3 et 4, caractérisé en ce que le levier (14) est équipé d'une serrure (26) comportant un pène (27) destiné à être engagé dans une gâche (28) ménagée dans le support (7), en position fermée du levier.

6. Porte-bicyclette selon l'une quelconque des revendications 3 à 5, du type comprenant un support fixé sur une barre du porte-bagages à l'aide de deux paires de vis, les deux vis de chaque paire étant disposées de part et d'autre de la barre considérée et étant vissées dans une même plaque prenant appui sous la barre, caractérisé en ce que, de façon originale, le support présente une ouverture (25) dégageant une partie (29) en forme de platine qui, prenant appui sur la barre (2), présente quatre trous (30) pour le passage des vis (32), les têtes de chaque paire de

7

vis étant associées à une plaque de couverture (35) empêchant leur manoeuvre lorsqu'elle est en place, et le levier conformé et dimensionné de façon à prendre appui sur les plaques de couverture des têtes de vis et à empêcher leur retrait, lorsque le levier est en position de fermeture.

FIG.1

FIG.2

22

18

8

14

7

24

2

4

5

3

2

33

32

0141757

FIG.3

FİG.4

0141757

4/5

FIG.5

Office européen
des brevets

**RAPPORT DE RECHERCHE EUROPEENNE**

0141757
Numéro de la demande

EP 84 42 0133

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| | | | B 60 R 9/10 |
| Y | FR-A-2 411 109 (GOUPIL)<br>* Revendications 1,2 * | 1 | |
| | --- | | |
| Y | FR-A-2 270 472 (CROS)<br>* Revendications 1-6 * | 1,3 | |
| | --- | | |
| A | US-A-2 415 286 (HYDE)<br>* En entier * | 1 | |
| | --- | | |
| A | FR-A-2 377 317 (GUEHENEUC) | | |
| | --- | | |
| A | FR-A-2 251 461 (PREALPINA) | | |
| | ----- | | |

| DOMAINES TECHNIQUES RECHERCHES (Int. Cl.4) |
|---|
| B 60 R 9/10 |

Le présent rapport de recherche a été établi pour toutes les revendications

| Lieu de la recherche | Date d'achèvement de la recherche | Examinateur |
|---|---|---|
| LA HAYE | 07-12-1984 | SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82